Europäisches Patentamt

European Patent Office

Office européen des brevets

(11) Publication number: 0 240 470 B1

(12) EUROPEAN PATENT SPECIFICATION

(45) Date of publication of patent specification: 25.07.90    (51) Int. Cl.⁵: B 62 D 29/04

(21) Application number: 87830089.6

(22) Date of filing: 09.03.87

(54) Motor vehicle with a load-bearing platform and body with elements of plastics material, and a method for its manufacture.

(30) Priority: 24.03.86 IT 6723086

(43) Date of publication of application:
07.10.87 Bulletin 87/41

(45) Publication of the grant of the patent:
25.07.90 Bulletin 90/30

(84) Designated Contracting States:
DE ES FR GB SE

(56) References cited:
DE-A-2 923 874
FR-A- 839 618
GB-A-1 237 615
US-A-4 438 971

(73) Proprietor: FIAT AUTO S.p.A.
Corso Giovanni Agnelli 200
I-10135 Torino (IT)

(72) Inventor: Castelli, Pierguido
Strada del Fioccardo 49
I-10133 Torino (IT)
Inventor: Leonardis, Raffaele
Corso Unione Sovietica 409
I-10135 Torino (IT)
Inventor: Cornacchia, Felice
Corso Giovanni Agnelli 24
I-10137 Torino (IT)

(74) Representative: Buzzi, Franco et al
c/o Jacobacci-Casetta & Perani S.p.A. Via Alfieri,
17
I-10121 Torino (IT)

Courier Press, Leamington Spa, England.

## Description

The present invention relates generally to motor vehicles and methods for their manufacture.

The current techniques for assembling the component parts of a motor vehicle include several automated steps. Furthermore, these techniques require corrosion protection, sound-proofing, and painting treatments to be carried out after the assembly of the structural elements constituting the vehicle body, after which the various functional units and internal equipment are assembled.

Such a production cycle is very long and requires expensive equipment, particularly for transporting the bodies to the painting and equipment lines.

Moreover, vehicles have already been proposed with bodies constituted by elements of moulded plastics material so as to reduce, among other things, the problems connected with the protective treatment and the painting of the body. However, in the proposed solutions, the conformation of the body reproduces conventional configurations of sheet metal bodies and the body is not able to ensure the necessary structural strength. In no case have any of these solutions arrived at a completely automated manufacturing system.

In the FR-A-839618 a body element made of plastics material is jointed to a load-bearing platform made of metal by means of adhesive. The operation of assembling the different parts is very long and is not suitable for automatic assembly techniques.

The object of the present invention is exactly that of providing a motor vehicle which is so formed as to enable it to be manufactured in a completely automated assembly cycle at the end of which special final treatments are not required.

In order to achieve this object, the present invention provides a motor vehicle including: a pre-assembled load-bearing platform (5) arranged to receive mechanical power units as well as functional units and internal equipment for the vehicle and a body element (2) of moulded plastic material defining at least the roof and the sides of the vehicle, the body (2) being joined to the load-bearing platform by fixing techniques by means of adhesives, characterised in that the platform (1) has been previously subjected to corrosion protection treatments, sound-proofing, and possible mechanical adjustment operations; the body (2) being joined to the load-bearing platform (1) by automated fixing techniques, these techniques comprising adhesives with the aid of mechanical connections other than welding which requires further painting and rust-proofing treatments, the body (2) being constituted by pre-assembled and finished sub-units including body elements (6, 7) of moulded plastic material.

The invention also has for its object a method for the manufacture of method for the manufacture of a motor vehicle comprising the following steps:

assembling a load-bearing platform (1) prearranged to receive mechanical power units as well as functional units and internal equipment for the vehicle,

assembling a body (2) of moulded plastics material defining at least the roof and the sides of the vehicle, characterised in that it further comprises the following steps.

joining the body (2), being constituted by pre-assembled and finished sub-units including body elements (6, 7) of moulded plastic material, with the load-bearing platform (1) by automated fixing techniques with adhesives with the aid of mechanical connections which avoid further painting and rust-proofing treatments,

assembling the mechanical power units as well as the functional units and internal equipment of the vehicle before or after the joining of the body (2) to the load-bearing platform (1),

attaching any pre-assembled and finished parts for completing the front and rear of the body, and

previously subjecting the platform (1) to corrosion protection treatments, sound-proofing, and possible mechanical adjustment operations.

The step of assembling the body may consist of providing a metal support framework and applying the moulded plastics elements to this metal framework, or of providing the moulded plastics elements with metal support members and joining the elements of plastics material so as to form a support framework with the metal members.

The invention will be now described in detail with reference to the appended drawings, provided purely by way of non-limiting example, in which:

Figure 1 is an exploded perspective view illustrating the essential components of a motor vehicle according to the invention before assembly,

Figure 2 is a perspective view on an enlarged scale, illustrating an intermediate step in the method of manufacture of the vehicle of Figure 1, according to a first embodiment of the method of the invention,

Figure 3 is a view similar to Figure 2 of another embodiment of the method of the invention, and

Figure 4 illustrates a variant of Figure 1.

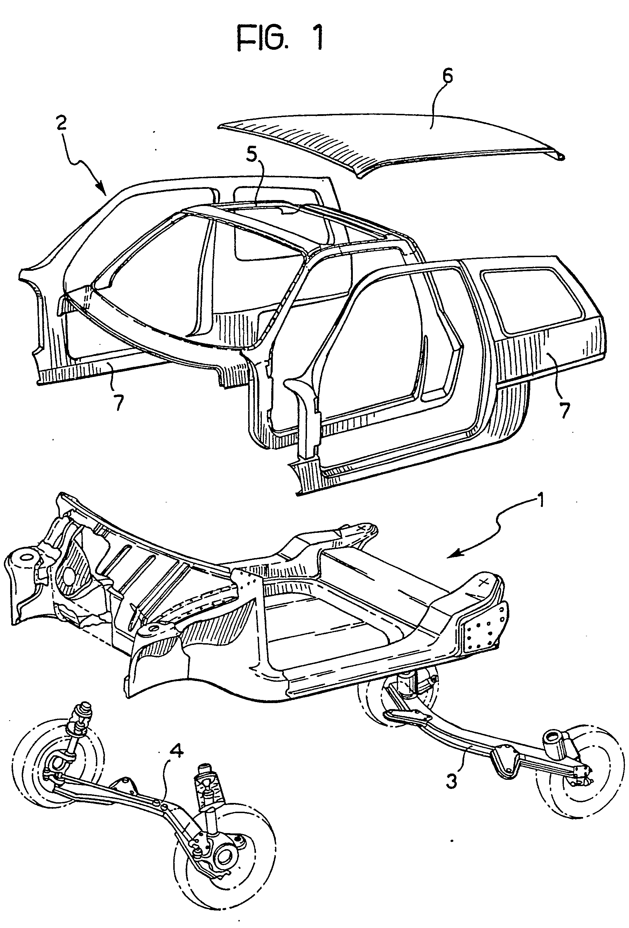

Figure 1 shows the essential components of the motor vehicle according to the invention: in practice, these are constituted by a load-bearing platform and a body, generally indicated 1 and 2 respectively.

The platform 1 has the function, on the one hand, of constituting the element on which all the various mechanical units of the vehicle are assembled and, on the other hand, of constituting a base or floor of the vehicle itself. This platform 1 is constituted by a pre-assembled supporting structure subjected beforehand to corrosion protection and sound-proofing treatments, so that it does not have to undergo any further operations during assembly of the vehicle.

As stated, the platform 1 is arranged to allow the automatic assembly of both the mechanical power unit and the body 2 and any other sub-units of the body, such as, for example, the bumpers, engine compartment, etc., not illustrated.

Of the mechanical units to be fitted to the platform 1, Figure 1 illustrates solely the respective suspension units 3, 4 for the rear and front wheels, the manner in which they are connected to the platform being explained below.

The body 2, also assembled independently, is constituted by pre-assembled and finished sub-units including body elements of moulded plastics material for defining the roof and sides of the vehicle. In the case of Figure 1, the body 2 includes a metal support framework 5 to which the body elements of moulded plastics material, constituted by the roof 6 and the two sides 7, are applied. Alternatively, it should be noted that, instead of being a pre-assembled element, the metal framework 5 could be formed from metal support members previously fixed to the elements of plastics material 6 and 7 and arranged to constitute the framework 5 as a result of the assembly of the elements 6 and 7.

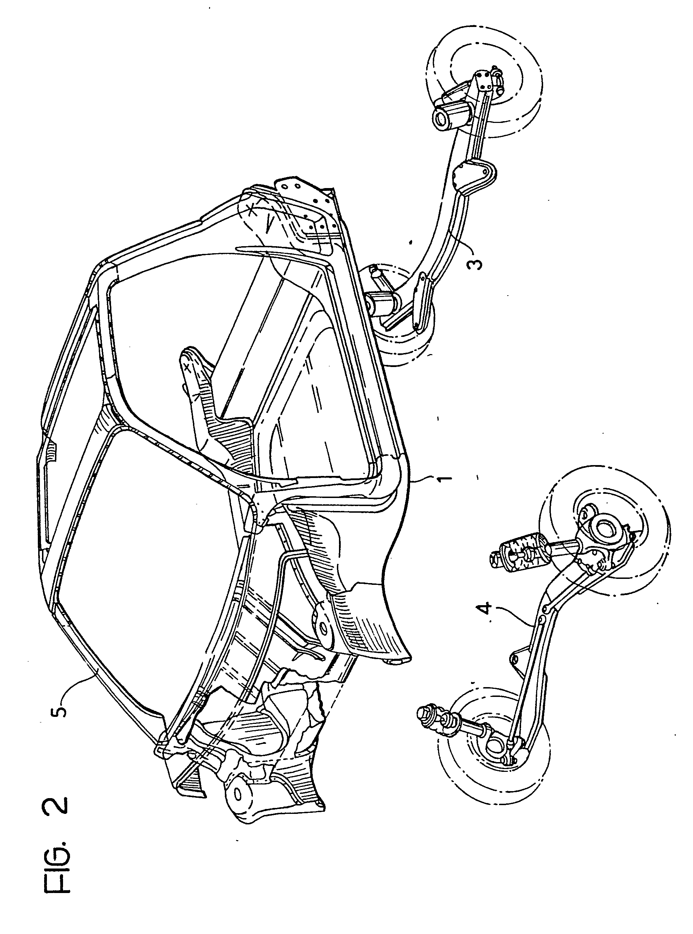

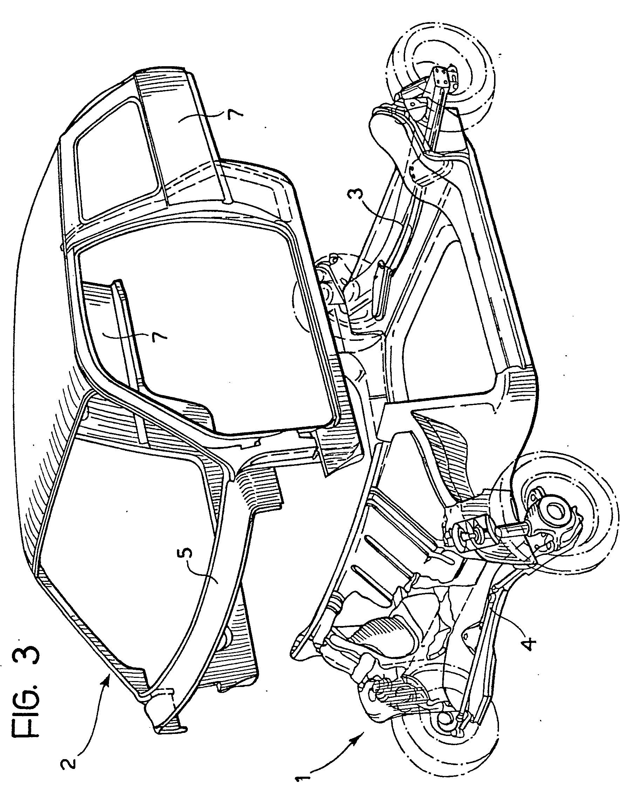

The cycle of assembly of the vehicle 1, as stated, provides for the separate assembly of the platform 1 and the body 2 and their subsequent joining by non-welded connections by means of very thick elastomeric adhesives supplemented by a limited number of automatic screwing operations which have the function of ensuring that the assembled unit can be moved immediately after glueing. It is possible first to carry out the coupling of the framework 5 and the platform 1 and subsequently to assemble the body elements 6 and 7 and the front and rear suspension units 3 and 4 in the manner illustrated in Figure 2, or, alternatively, it is possible to complete the assembly of the body 2 and the platform 1 with the mechanical units 3 and 4 beforehand and then to join them as illustrated in Figure 3. This second solution is more advantageous in that it is possible to carry out various preliminary mechanical adjustments of the units 3 and 4 (as well as of other mechanical units previously mounted on the platform 1), avoiding the necessity of carrying out these operations subsequently.

The vehicle unit thus constituted is then completed by other front and rear body elements which are also of moulded plastics material, possibly by other components of the power unit, as well as by the various functional units and internal equipment of the vehicle. With regard to this, it should be stated that, to advantage, all the mechanical, functional and equipment units may be pre-assembled on the platform 1 before it is joined to the body 2 and the bodywork is completed.

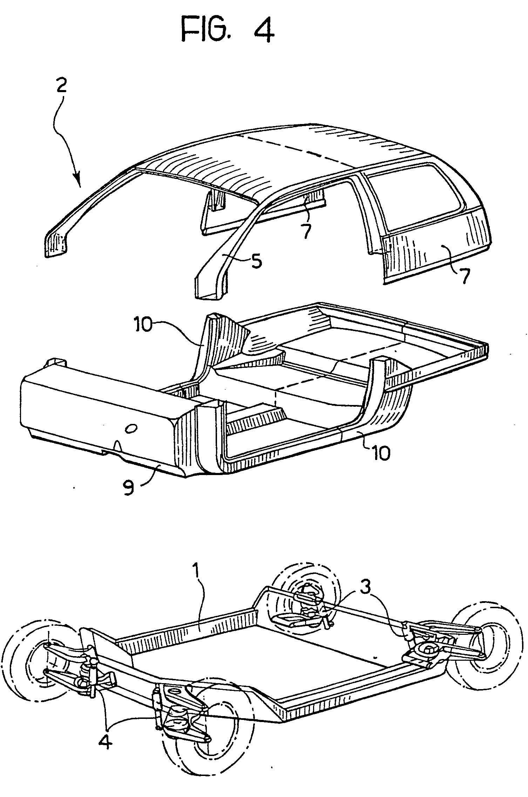

The variant of the vehicle illustrated in Figure 4 is generally similar to the embodiment described above and differs from it only in that it has a different general conformation of the platform 1 and of the body 2. The latter, in addition to a metal framework 5 to which a pre-assembled unit 8 formed by the elements 6 and 7 of moulded plastics material is attached, also includes a floor 9 constituted by a moulded plastics monocoque provided with lateral metal elements 10 intended to be joined to the framework 5 to complete the side door openings.

The manner in which the body 2 is connected to the platform 1 in this case is similar to that described above.

In each case, the conformation of the vehicle according to the invention is such as to allow the various components to be assembled and joined together by completely automated techniques.

**Claims**

1. Motor vehicle including:
a pre-assembled load-bearing platform (1) arranged to receive mechanical power units as well as functional units and internal equipment for the vehicle and a body (2) of moulded plastics material defining at least the roof and the sides of the vehicle, the body (2) being joined to the load-bearing platform by fixing techniques by means of adhesives, characterised in that the platform (1) has been previously subjected to corrosion protection treatments, sound-proofing, and possible mechanical adjustment operations; the body (2) being joined to the load-bearing platform (1) by automated fixing techniques, these techniques comprising adhesives with the aid of mechanical connections which avoid further painting and rust-proofing treatments, the body (2) being constituted by pre-assembled and finished sub-units including body elements (6, 7) of moulded plastic material.

2. Motor vehicle according to Claim 1, characterised in that the body (2) further includes a floor constituted by a monocoque (10) of moulded plastics material.

3. Motor vehicle according to Claim 1, characterised in that the body (2) includes a metal support framework (5) for the body elements (6, 7) of moulded plastics material.

4. Method for the manufacture of a motor vehicle according to any one of Claims 1 to 3, comprising the following steps:
assembling a load-bearing platform (1) prearranged to receive mechanical power units as well as functional units and internal equipment for the vehicle,
assembling a body (2) of moulded plastics material defining at least the roof and the sides of the vehicle, characterised in that it further comprises the following steps:
joining the body (2) being constituted by pre-assembled and finished sub-units including body elements (6, 7) of moulded plastic material, with the load-bearing platform (1) by automated fixing techniques with adhesives with the aid of mechanical connections which avoid further painting and rust-proofing treatments,
assembling the mechanical power units as well as the functional units and internal equipment of the vehicle before or after the joining of the body (2) to the load-bearing platform (1),

attaching any pre-assembled and finished parts for completing the front and rear of the body, and previously subjecting the platform (1) to corrosion protection treatments, sound-proofing, and possible mechanical adjustment operations.

5. Method according to Claim 4, characterised in that the step of assembling the body (2) consists of providing a metal support framework (5) and attaching the elements (6, 7) of moulded plastics material to this metal framework.

6. Method according to Claim 4, characterised in that the step of assembling the body (2) consists of providing the elements (6, 7) of moulded plastics material with metal support members and joining the elements (6, 7) of moulded plastics material so as to form a support framework (5) with the metal members.

7. Method according to Claim 5, characterised in that the elements (6, 7) of moulded plastics material are assembled beforehand to constitute a pre-assembled sub-unit (8) which is subsequently joined to the metal framework (5).

**Patentansprüche**

1. Kraftfahrzeug
mit einer vorbereiteten tragenden Plattform (1) zur Aufnahme von mechanischen Leistungseinheiten und funktionellen Einheiten sowie von Fahrzeuginnenausstattung
und mit einem Körper (2) aus geformtem Kunststoff, der zumindest das Dach und die Seitenteile des Fahrzeugs bildet und mit der tragenden Plattform durch Befestigungsverfahren unter Zuhilfenahme von Klebstoffen verbunden ist,
dadurch gekennzeichnet,
daß die Plattform (1) zuvor Korrosionsschutzbehandlungen, Schalldämmungsmaßnahmen und gegebenenfalls mechanischen Justiervorgängen unterzogen wurde,
daß der Körper (2) mit der tragenden Plattform (1) durch automatisierte Befestigungsverfahren unter Verwendung von Klebstoffen und mit Hilfe mechanischer Verbindungen verbunden ist, die weitere Lackierungsarbeiten und Rostschutzbehandlungen erübrigen,
und daß der Körper (2) aus vormontierten und fertig bearbeiteten Untereinheiten besteht, die Körperelemente (6, 7) aus geformtem Kunststoff umfassen.

2. Kraftfahrzeug nach Anspruch 1, dadurch gekennzeichnet, daß der Körper (2) ferner einen Boden umfaßt, der aus einer Schale (10) aus geformtem Kunststoff besteht.

3. Kraftfahrzeug nach Anspruch 1, dadurch gekennzeichnet, daß der Körper (2) einen Tragrahmen (5) aus Metall für die Elemente (6, 7) aus geformtem Kunststoff aufweist.

4. Verfahren zur Herstellung eines Kraftfahrzeugs nach einem der Ansprüche 1 bis 3 mit folgenden Verfahrensschritten:
Zusammenbau einer tragenden plattform (1), die zur Aufnahme von mechanischen Leistungseinheiten und funktionellen Einheiten sowie von Fahrzeuginnenausstattung vorbereitet ist,
Zusammenbau eines Körpers (2) aus geformtem Kunststoff, der zumindest das Dach und die Seitenteile des Fahrzeugs bildet
gekennzeichnet durch die weiteren Verfahrensschritte,
daß der aus vormontierten und fertig bearbeiteten Untereinheiten, einschließlich die Elementen (6, 7) aus geformtem Kunststoff bestehende Körper (2) durch automatisierte Befestigungsverfahren unter Verwendung von Klebstoffen und mit Hilfe mechanischer Verbindungen verbunden ist, die weitere Lackierungsarbeiten und Rostschutzbehandlungen erübrigen, der tragenden Plattform (1) verbunden wird,
daß die mechanischen Leistungseinheiten und die funktionellen Einheiten sowie die Fahrzeuginnenausstattung vor oder nach dem Verbinden des Körpers (2) mit der tragenden Plattform (1) auf dieser montiert werden,
daß vormontierte und fertig bearbeitete Teile zur Vervollständigung der vorderen und hinteren Bereichs des Körpers (2) angebracht werden
und daß die Plattform (1) zuvor Korrosionsschutzbehandlungen, Schalldämmungsmaßnahmen und gegebenenfalls mechanischen Justiervorgängen unterzogen wird.

5. Verfahren nach Anspruch 4, dadurch gekennzeichnet, daß der Verfahrensschritt des Montierens des Körpers (2) darin besteht, daß ein Tragrahmen (5) aus Metall vorgesehen wird und daß die Elemente (6, 7) aus geformtem Kunststoff an diesem Tragrahmen (5) befestigt werden.

6. Verfahren nach Anspruch 4, dadurch gekennzeichnet, daß der Verfahrensschritt des Montierens des Körpers (2) darin besteht, daß die Elemente (6, 7) aus geformtem Kunststoff mit tragenden Metallteilen versehen werden und daß die Elemente (6, 7) aus geformtem Kunststoff so verbunden werden, daß sie mit den Metallteilen einen Tragrahmen (5) bilden.

7. Verfahren nach Anspruch 5, dadurch gekennzeichnet, daß die Elemente (6, 7) aus geformtem Kunststoff zuvor zu einer vormontierten Untereinheit (8) zusammengesetzt werden, die anschliessend mit dem Tragrahmen (5) aus Metall verbunden wird.

**Revendications**

1. Véhicule automobile comprenant:
une plate-forme support de charge pré-assemblée (1) agencée pour recevoir des unités mécaniques motrices ainsi que des unités fonctionnelles et qu'un équipement intérieur du véhicule, et une caisse (2) en matière plastique moulée qui définit au moins le pavillon et les flancs du véhicule, la caisse (2) étant réunie à la plate-forme support de charge par des techniques de fixation utilisant des adhésifs, caractérisé en ce que la plate-forme (1) a été préalablement soumise à des traitements de protection contre la corrosion, à une insonorisation et éventuellement à des opérations d'ajustement mécanique; la caisse (2) étant réunie à la plate-forme support de charge (1) par des techniques de fixation automatisées, ces techniques comprenant des adhésifs avec l'aide de liaisons mécaniques qui évitent d'autres traitements de peinture et d'anti-corrosion, la caisse (2) étant constituée par des sous-ensembles pré-assemblés et finis qui comprennent des éléments de caisse (6, 7) en matière plastique moulée.

2. Véhicule automobile selon la revendication 1, caractérisé en ce que la caisse (2) comprend en outre un plancher constitué par une monocoque (10) en matière plastique moulée.

3. Véhicule automobile selon la revendication 1, caractérisé en ce que la caisse (2) comprend une ossature porteuse métallique (5) servant à porter les éléments de caisse (6, 7) en matière plastique moulée.

4. Procédé de fabrication du véhicule automobile selon une quelconque des revendications 1 à 3, comprenant les phases suivantes:

assembler une plate-forme support de charge (1) préagencée pour recevoir des unités motrices mécaniques ainsi que des unités fonctionnelles et que l'équipement intérieur du véhicule,

assembler une caisse (2) en matière plastique moulée qui définit au moins le pavillon et les flancs du véhicule, caractérisé en ce qu'il comprend en outre les phases suivantes:

réunir la caisse (2) qui est composée de sous-ensembles pré-assemblés et finis, qui comprennent des éléments de caisse (6, 7) en matière plastique moulée, à la plate-forme support de charge (1), par des techniques de fixation automatisées comprenant des adhésifs avec l'aide de liaisons mécaniques qui évitent des traitements extérieurs de mise en peinture et d'anti-corrosion,

assembler les unités motrices mécaniques ainsi que les unités fonctionnelles et que l'équipement intérieur du véhicule avant ou après la réunion de la caisse (2) à la plate-forme support de charge (1);

fixer d'éventuelles pièces pré-assemblées et finies pour compléter l'avant et l'arrière de la caisse, et

soumettre préalablement la plate-forme (1) à des traitements de protection contre la corrosion, à une insonorisation et à d'éventuelles opérations d'ajustement mécanique.

5. Procédé selon la revendication 4, caractérisé en ce que la phase d'assemblage de la caisse (2) consiste à prévoir une ossature porteuse métallique (5) et à fixer les éléments (6, 7) en matière plastique moulée à cette ossature métallique.

6. Procédé selon la revendication 4, caractérisé en ce que la phase d'assemblage de la caisse (2) consiste à munir les éléments (6, 7) en matière plastique moulée d'éléments porteurs métalliques et à réunir les éléments (6, 7) de manière à former une ossature porteuse (5) avec les éléments métalliques.

7. Procédé selon la revendication 5, caractérisé en ce que les éléments (6, 7) en matière plastique moulée sont assemblés préalablement pour constituer un sous-ensemble pré-assemblé (8) qui est ultérieurement réuni à l'ossature métallique (5).

# FIG. 1

FIG. 2

FIG. 3

FIG. 4